# DEMANDE DE BREVET EUROPEEN

(11) **EP 1 972 236 A2**
(43) Date de publication de la demande: **24.09.2008**
(21) Numéro de dépôt: 08005024.8
(22) Date de dépôt: 18.03.2008
(51) Int. Cl.: A47G 1/06

(54) **Tableau végétal**

(30) Priorité: 22.03.2007 FR 0702094
(71) Demandeur: Palau, Marie-Claude, 74410 Saint Jorioz (FR)
(72) Inventeur: Palau, Marie-Claude, 74410 Saint Jorioz (FR)
(74) Mandataire: Gasquet, Denis

(57) **Abrégé**

Tableau végétal (1) caractérisé en ce qu'il est constitué par une boîte (2) dont la paroi frontale comprend au moins un trou destiné à recevoir un ensemble végétal (50), ledit ensemble végétal comprenant une composition végétale dont le substrat est contenu dans un contenant formé par une enveloppe en matériau souple et étanche.

## Description

La présente invention concerne un tableau végétal, destiné plus particulièrement à être disposé contre un mur, pour servir d'élément décoratif, voir de communication ou de présentation d'informations, mais il pourrait être tout simplement mis sur un plan horizontal tel que sur une table ou autre support.

On connaît déjà une multitude de type de présentation florale, mais rien n'existe pour faire des présentations verticalisée.

Le but de la présente invention est de proposer un dispositif constituant un tableau végétal.

Ainsi, le tableau végétal est caractérisé en ce qu'il est constitué par une boîte dont la paroi frontale comprend au moins un trou destiné à recevoir un ensemble végétal, ledit ensemble végétal comprenant une composition végétale dont le substrat est contenu dans un contenant formé par une enveloppe en matériau souple et étanche.

Selon une caractéristique complémentaire, la composition végétale est de tout type de végétation, à savoir des plantes telles que du lierre, des fleurs, de la végétation naturelle ou synthétique.

Selon une autre caractéristique, la boîte comprenant une paroi frontale comprenant au moins un trou, comprenant des moyens de retenue de l'ensemble végétal, tandis les moyens de retenue sont tels que la périphérie du trou est constituée de plusieurs éléments de paroi séparée par des fentes radiales successives permettant par la mobilité des différents éléments de paroi de retenue assurant la déformation du trou permettant l'introduction de l'ensemble végétal tout en assurant sa retenue, comme nous le verrons ci-après dans la suite de la description.

Selon le mode préféré, la boîte est constituée par au moins deux éléments de boîte, à savoir un premier élément et un deuxième élément, tandis que le premier élément constitue le fond de la boite et un trottoir périphérique, et que le deuxième élément de boite constitue la paroi frontale.

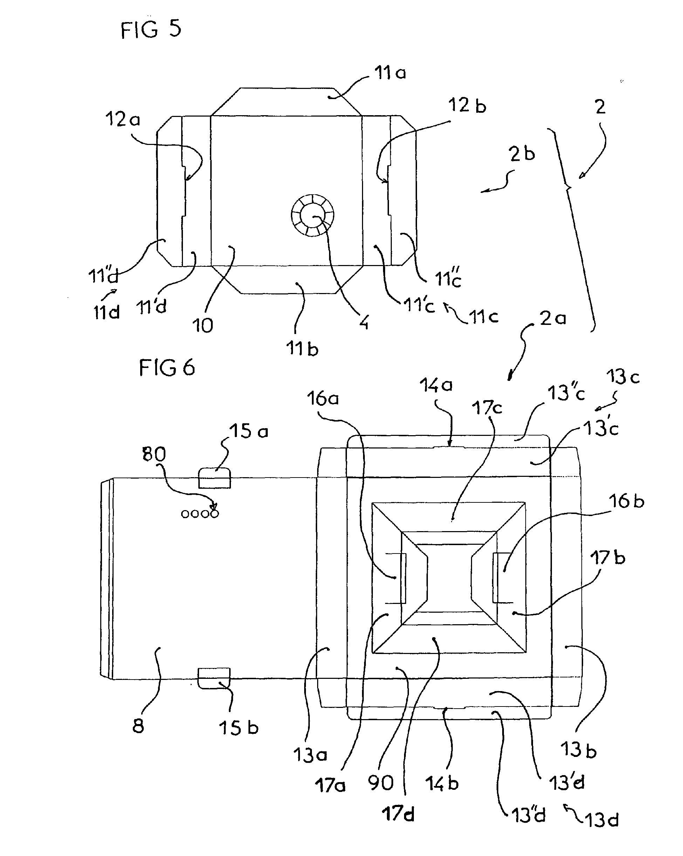

Selon d'autres caractéristiques liées au mode préféré, le deuxième élément de boite, qui constitue la paroi frontale, est telle que ladite paroi est en position déployée telle qu'illustrée à la figure 5, est prolongée à sa périphérie vers l'extérieur par plusieurs bandes latérales, tandis que, ladite paroi, en position déployée est prolongée par deux bandes latérales opposées constituant deux simples plis, et deux autres bandes latérales opposées qui sont formées par deux éléments de bandes parallèles.

Notons que chacun des éléments de bandes parallèles adjacent à la paroi frontale comprend une découpe qui servira de verrouillage quand du deuxième élément de boite.

Notons aussi que le premier élément de boite constitue le fond de la boîte et un trottoir périphérique, et est constitué par une paroi d'un seul tenant, à savoir d'une part le fond et d'autre part le trottoir périphérique.

Ajoutons que le trottoir périphérique, en position déployée est constitué par deux bandes latérales opposées constituant deux simples plis, et deux autres bandes latérales opposées qui sont formées par deux éléments de bandes parallèles, tandis que chacun des éléments de bandes parallèles adjacent à la paroi frontale du trottoir comprend une découpe qui forme en position montée un trou de verrouillage pour assurer le verrouillage du fond par rapport au trottoir par engagement de deux languettes de blocage réalisée sur le fond.

La paroi périphérique interne du trottoir du premier élément de boîte, formé par les portions internes de trottoir est telle qu'au moins deux de ces parois comprennent une languette de verrouillage destinées à coopérer avec les saillies crées par les découpes afin d'assurer le blocage du deuxième élément de boîte dans le premier des éléments de boîte.

Ajoutons qu'en position montée du deuxième élément de boîte dans le premier élément de boîte la hauteur du trottoir est légèrement supérieure à la hauteur du deuxième élément de boîte, et ce afin que le plan de la paroi frontale soit en dessous du plan de la paroi frontale du trottoir, de façon à créer un léger rebord en saillie par rapport à la paroi frontale.

On a compris que le tableau végétal selon l'invention permet un accrochage sur un mur, destiné à décorer un intérieur de façon agréable. On notera aussi que la boîte peut être décorée et servir de support d'information, pour par exemple transmettre un message. Ainsi, la boîte peut servir de support de communication, par exemple à l'occasion d'un événement tel qu'un salon, un mariage, un anniversaire, ou autre, comme par exemple un lieu d'accueil du public.

Par ailleurs au tableau végétal pourrait intégrer une ou plusieurs lumières, voir du son, ou une animation de type vidéo, ou autre. D'autres applications pourraient être de diffuser du parfum, ou de servir de support de dégustation de différentes saveurs nutritives tel qu'un diffuseur de parfum ;

On a compris aussi que grâce à l'enveloppe étanche souple, le substrat peut être humidifié sans qu'il y ait des fuites d'eau ou une détérioration de la boîte.

D'autres caractéristiques et avantages de l'invention se dégageront de la description qui va suivre en regard des dessins annexés qui ne sont donnés qu'à titre d'exemples non limitatifs.

La figure 1 est une vue en perspective du tableau végétal.

La figure 2 est une vue de face de la boîte destinée à recevoir la composition végétale.

La figure 3 est une vue en coupe transversale de la boîte avec sa composition végétale, la coupe étant faite au niveau de ladite composition végétale.

La figure 4 est une vue en coupe transversale de la boîte, la coupe étant faite hors du niveau de la composition végétale.

La figure 5 est une vue en plan de l'un des éléments constituant la boîte et formant le fond de cette dernière, cet élément étant en position déployée avant pliage et montage sur l'autre élément de boîte.

La figure 6 est une vue en plan de l'autre élément constituant la boîte et formant la paroi frontale de cette dernière, cet élément étant en position déployée avant pliage et montage sur l'autre élément de boîte.

Les figures 7a, 7b, 7c, sont des vues de détail, en coupe illustrant comment est engagée et retenue la composition végétale.

La figure 8 représente la composition végétale en cours d'extraction de sa boîte.

La figure 9 est une vue similaire à la figure 1 représentant une variante de réalisation.

Le tableau végétal de l'invention portant la référence générale (1) est constitué par une boîte (2) dont la paroi frontale (3) comprend au moins un trou (4) destiné à recevoir une composition végétale (5), ladite composition végétale étant contenue dans un contenant formé par une enveloppe (6) en matériau souple et étanche, contenant un substrat (7) destiné au moins à conserver et /ou de développer la composition végétale. L'ensemble comprenant la composition végétale (5) avec l'enveloppe (6) et le substrat (7) sera appelé dans la suite de la description et sa compréhension, ensemble végétal (50).

On entendra par composition végétale (5) tout type de végétation, à savoir des plantes telles que du lierre, des fleurs, de la végétation naturelle ou synthétique.

On entendra par substrat tout matériau tel que de la terre, de la mousse synthétique ou tout autre matériau hydroponique admettant de l'eau ou des oligoéléments pour la survie des plantes. Le substrat pourrait être aussi constituer par un support dans lequel des plantes artificielles seraient piquées

Afin de retenir le substrat il est prévu un organe de cerclage (20) tel qu'un lien souple, déformable ou un élastique.

La boîte (2) est constituée par au moins deux éléments de boîte (2a, 2b), à savoir un premier élément (2a) et un deuxième élément (2b).

Le premier élément (2a) constitue le fond (8) de la boite et un trottoir périphérique (9).

Le deuxième élément de boite (2b) constitue la paroi frontale (10), qui comprend au moins un trou (4), comprenant des moyens de retenue de l'ensemble végétal (50).

Ces moyens de retenue étant tels que la périphérie du trou (4) est constituée de plusieurs élément de paroi (40) séparées par des fentes radiales successives (41) permettant par la mobilité des différents éléments de paroi de retenue (40) assurant la déformation du trou (4) permettant l'introduction et l'extraction de l'ensemble végétal (50) tout en assurant sa retenue, comme nous le verrons ci-après dans la suite de la description.

Le deuxième élément de boite (2b) tel que décrit précédemment, qui constitue la paroi frontale (10), est telle que ladite paroi est en position déployée telle qu'illustrée à la figure 5, est prolongée à sa périphérie vers l'extérieur par plusieurs bandes latérales (11a, 11b, 11c, 11d).

Selon le mode de réalisation préféré tel qu'illustré la boîte (2) est telle que sa paroi frontale est par exemple carrée. Ainsi, ladite paroi, en position déployée telle qu'illustrée à la figure 5, est prolongée par deux bandes latérales opposées (11a, 11b) constituant deux simples plis, et deux autres bandes latérales opposées (11c, 11d) qui sont formées par deux éléments de bandes parallèles respectivement (11'c, 11"c) et (11'd, 11"d). On notera que chacun des éléments de bandes parallèles adjacent (11'c, 11'd) à la paroi frontale (10) comprend une découpe (12) qui servira de verrouillage du deuxième élément de boite (2b).

Le premier élément de boite (2a) comme nous l'avons décrit précédemment constitue le fond de la boîte (8) et un trottoir périphérique (9). Ce premier élément de boîte (2a) est constitué par une paroi d'un seul tenant, à savoir d'une part le fond (8) et d'autre part le trottoir périphérique (9).

Ainsi, le trottoir périphérique (9), en position déployée telle qu'illustré à la figure 6, est constitué par deux bandes latérales opposées (13a, 13b) constituant deux simples plis, et deux autres bandes latérales opposées (13c, 13d) qui sont formées par deux éléments de bandes parallèles respectivement (13'c, 13''c) et (13'd, 13''d). On notera que chacun des éléments de bandes parallèles adjacent à la paroi frontale (90) du trottoir (9) comprend une découpe (14a, 14b) qui formera en position montée un trou de verrouillage pour assurer le verrouillage du fond (8) par rapport au trottoir (9) par engagement de deux languettes de blocage (15a,15b) réalisée sur le fond (8).

La paroi périphérique interne (91) du trottoir (9) du premier élément de boîte (2a), formé par les portions internes de trottoir (17a, 17b, 17c, 17d) est telle qu'au moins deux de ces parois comprennent une languette de verrouillage (16a,16b) destinées à coopérer avec les saillies (12a, 12b) créer par les découpes (12) afin d'assurer le blocage du deuxième élément de boîte (2b) dans le premier (2a) des éléments de boîte.

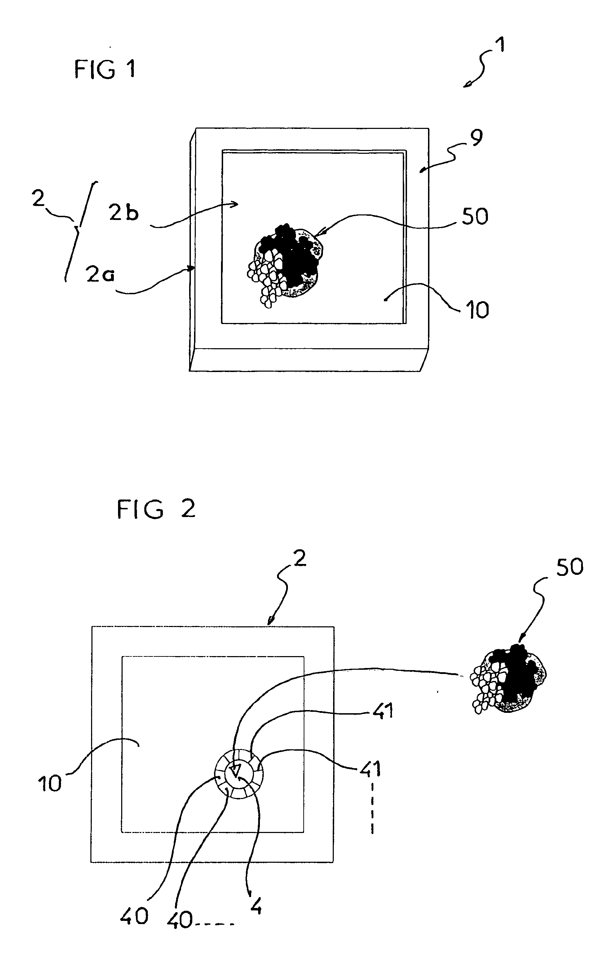

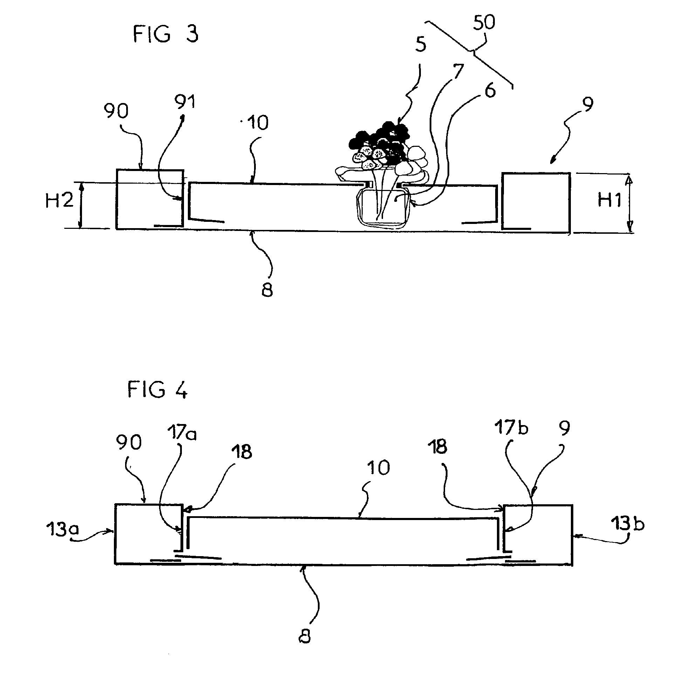

En position montée du deuxième élément de boîte (2b) dans le premier élément de boîte (2a) telle qu'illustrée aux figures 1, 3, et 4, on constate que la hauteur (H1) du trottoir (9) est légèrement supérieure à la hauteur (H2) du deuxième élément de boîte (2b), et ce afin que le plan de la paroi frontale (10) soit en dessous du plan de la paroi frontale (90) du trottoir, de façon à créer un léger rebord en saillie (18) par rapport à la paroi frontale (10).

Ajoutons que la hauteur (H3) du substrat (5) avec son enveloppe, est in férieures à la hauteur (H2) du deuxième élément (2b).

On notera que pour permettre l'accrochage contre par exemple un mur le fond (8) comprend au moins un trou d'accrochage (80).

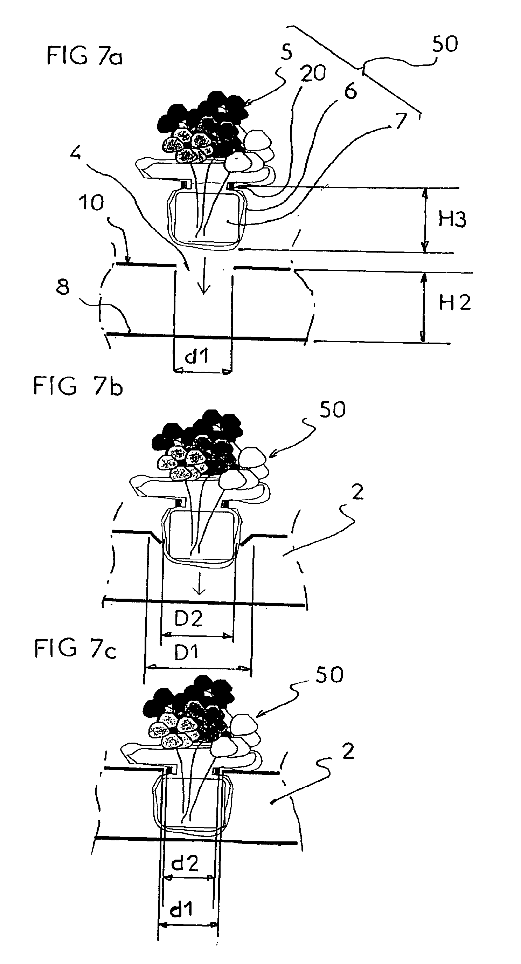

Les figures 7a, 7b, 7c, sont des vues de détail, en coupe illustrant comment est engagée et retenue la composition végétale.

La figure 7a représente le dispositif avant montage de la composition végétale, qui est présenté par l'utilisateur au niveau du trou (4).

La figure 7b représente le dispositif en cours de montage de la composition, selon lequel la composition est engagée dans le trou (4) de réception par déformation vers l'intérieur des éléments de paroi (40) qui sont poussées vers le bas par le passage du contenant.

La figure 7c représente la composition végétale une fois mise en place et retenue par les éléments de paroi (40) qui font office de dispositif anti-retour.

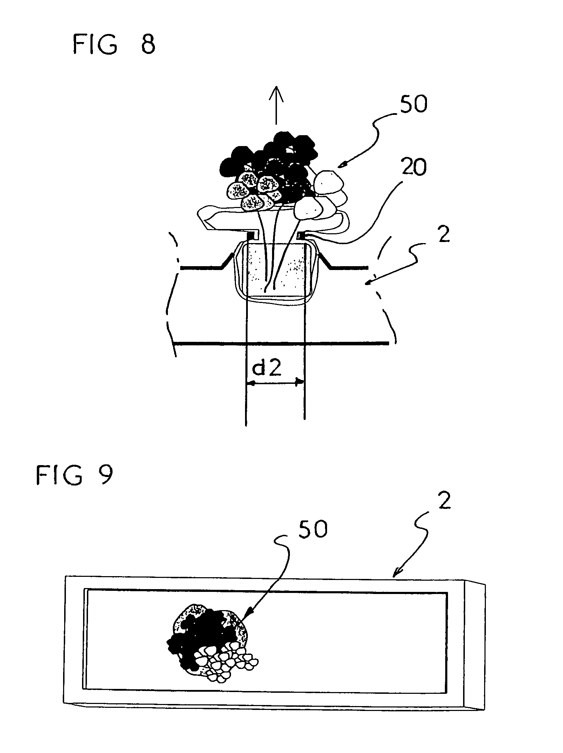

La figure 8 représente la composition végétale (50) en cours d'extraction de sa boîte (2) correspondante ;

Notons que le diamètre (D1) du trou (4) au delà de la zone de déformation (40, 41) est légèrement supérieure au diamètre externe (D2) de substrat (7) avec son enveloppe. Ajoutons aussi que le diamètre (d1) du trou (4) en bordure de la zone de déformation (40, 41) est légèrement supérieur au diamètre (d2) de la zone de striction de l'ensemble végétal là ou est localisé le lien (20).

L'extraction de l'ensemble végétal (50) se fait inversement tel que cela est illustré à la figure 8, par extraction vers le haut et déformation vers le haut des éléments de paroi (40). Selon les figures 1 à 6, la boîte se présente sous la forme d'un volume dont la face frontale est de forme carrée, mais il pourrait en être autrement comme cela est représenté notamment et par exemple à la figure 9.

On ajoutera à la description ci-dessus faite que la boîte est avantageusement en carton, mais pourrait aussi être en toute autre matière tel que constituée avec des parois en plastique, voir en bois, ou en métal ou même en matériau de base végétal.

Bien entendu, l'invention n'est pas limitée aux modes de réalisation décrits et représentés à titre d'exemples, mais elle comprend aussi tous les équivalents techniques ainsi que leurs combinaisons.

Il va de soi que le tableau végétal pourrait avoir plus d'un ensemble végétal (50) mais plusieurs ensembles végétaux.

Il va de soi aussi que la paroi frontale et le fond peuvent être décorés et/ou présenter des informations, et servir d'outils de communication.

La boîte décrite précédemment peut être un support diffuseur de parfum, voir un support de dégustation de saveur, tel que pour présenter des bâtonnets de chocolat ou tout autre friandise.

## Revendications

1. Tableau végétal (1) **caractérisé en ce qu'**il est constitué par une boîte (2) dont la paroi frontale (3) comprend au moins un trou (4) destiné à recevoir un ensemble végétal (50), ledit ensemble végétal comprenant une composition végétale (5) dont le substrat (7) est contenu dans un contenant formé par une enveloppe (6) en matériau souple et étanche.

2. Tableau végétal (1) selon la revendication 1, **caractérisé en ce que** la composition végétale (5) est de tout type de végétation, à savoir des plantes telles que du lierre, des fleurs, de la végétation naturelle ou synthétique.

3. Tableau végétal (1) selon la revendication 2, **caractérisé en ce que** la boîte (2) comprenant une paroi frontale (10) comprenant au moins un trou (4), comprenant des moyens de retenue (40, 41) de l'ensemble végétal (50).

4. Tableau végétal (1) selon la revendication précédente, **caractérisé en ce que** les moyens de retenue sont tels que la périphérie du trou (4) est constituée de plusieurs élément de paroi (40) séparée par des fentes radiales successives (41) permettant par la mobilité des différents éléments de paroi de retenue (40) assurant la déformation du trou (4) permettant l'introduction de l'ensemble végétal (50) tout en assurant sa retenue, comme nous le verrons ci-après dans la suite de la description.

5. Tableau végétal (1) selon la revendication 4, **caractérisé en ce que** la boîte (2) est constituée par au moins deux éléments de boîte (2a, 2b), à savoir un premier élément (2a) et un deuxième élément (2b).

6. Tableau végétal (1) selon la revendication 5, **caractérisé en ce que** le premier élément (2a) constitue le fond (8) de la boite et un trottoir périphérique (9).

7. Tableau végétal (1) selon la revendication 6, **caractérisé en ce que** le deuxième élément de boite (2b) constitue la paroi frontale (10),

8. Tableau végétal (1) selon la revendication précédente, **caractérisé en ce que** le deuxième élément de boite (2b), qui constitue la paroi frontale (10), est telle que ladite paroi est en position déployée telle qu'illustrée à la figure 5, est prolongée à sa périphérie vers l'extérieur par plusieurs bandes latérales (11a, 11b, 11c, 11d), tandis que, ladite paroi, en position déployée est prolongée par deux bandes latérales opposées (11a, 11b) constituant deux simples plis, et deux autres bandes latérales opposées (11c, 11d) qui sont formées par deux éléments de bandes parallèles respectivement (11'c, 11''c) et (11'd, 11''d),

9. Tableau végétal (1) selon la revendication précédente, **caractérisé en ce que** chacun des éléments de bandes parallèles adjacent (11'c, 11'd) à la paroi frontale (10) comprend une découpe (12) qui servira de verrouillage quand du deuxième élément de boite (2b).

10. Tableau végétal (1) selon la revendication précédente, **caractérisé en ce que** le premier élément de boite (2a) constitue le fond de la boîte (8) et un trottoir périphérique (9), et est constitué par une paroi d'un seul tenant, à savoir d'une part le fond (8) et d'autre part le trottoir périphérique (9).

11. Tableau végétal (1) selon la revendication précédente, **caractérisé en ce que** le trottoir périphérique (9), en position déployée est constitué par deux bandes latérales opposées (13a, 13b) constituant deux simples plis, et deux autres bandes latérales opposées (13c, 13d) qui sont formées par deux éléments de bandes parallèles respectivement (13'c, 13"c) et (13'd, 13"d), tandis que chacun des éléments de bandes parallèles adjacent à la paroi frontale (90) du trottoir (9) comprend une découpe (14) qui forme en position montée un trou de verrouillage pour assurer le verrouillage du fond (8) par rapport au trottoir (9) par engagement de deux languettes de blocage (15a, 15b) réalisée sur le fond (8).

12. Tableau végétal (1) selon la revendication précédente, **caractérisé en ce que** la paroi périphérique interne (91) du trottoir (9) du premier élément de boîte (2a), formé par les portions internes de trottoir (17a, 17b, 17c, 17d) est telle qu'au moins deux de ces parois comprennent une languette de verrouillage (16a,16b) destinées à coopérer avec les saillies (12a,12b) crées par les découpes (12) afin d'assurer le blocage du deuxième élément de boîte (2b) dans le premier (2a) des éléments de boîte.

13. Tableau végétal (1) selon l'une quelconque des revendications 10 à 12, **caractérisé en ce qu'**en position montée du deuxième élément de boîte (2b) dans le premier élément de boîte (2a) la hauteur (H1) du trottoir (9) est légèrement supérieure à la hauteur (H2) du deuxième élément de boîte (2b), et ce afin que le plan de la paroi frontale (10) soit en dessous du plan de la paroi frontale (90) du trottoir, de façon à créer un léger rebord en saillie (18) par rapport à la paroi frontale (10).
